# EUROPEAN PATENT APPLICATION

(11) **EP 2 889 359 A1**
(43) Date of publication of application: **01.07.2015**
(21) Application number: 14195803.3
(22) Date of filing: 02.12.2014
(51) Int. Cl.: C09K 21/02, C09K 21/14

(54) **Fire-resistant composite materials and process for preparing thereof**

(30) Priority: 31.12.2013 TW 102149307
(71) Applicant: Industrial Technology Research Institute, Chutung Hsinchu 31040 (TW)
(72) Inventor: Hsueh, Mao-Lin, 928 Pingtung County (TW); Chen, Yi-Zhen, 710 Tainan City (TW); Yeh, Cheng-Wei, 900 Pingtung County (TW); Liu, Chih-Wei, 973 Hualien County (TW); Hsieh, Feng-Ming, 702 Tainan City (TW); Shih, Hsi-Hsin, 406 Taichung City (TW); Shih, Kuo-Chen, 813 Kaohsiung City (TW)
(74) Representative: Becker Kurig Straus

(57) **Abstract**

The present disclosure provides a fire-resistant composite material comprising at least one inorganic component and at least one nonisocyanate polyurethane having a formula of: 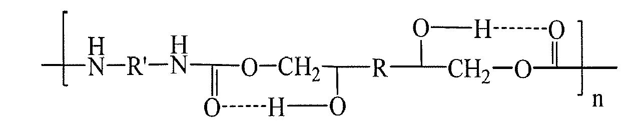 wherein R and R' are each independently chosen from hydrocarbylene groups and hydrocarbylene groups having at least one heteroatom chosen from oxygen, nitrogen, and sulfur; and n=1-30. Also provided are processes for preparing the disclosed fire-resistant composite material.

## Description

The present application relates to a fire-resistant composite material and a process for preparing thereof.

### BACKGROUND OF THE INVENTION

Polymers have been used in a wide range of industries and products. However, some of the commonly used polymers are highly flammable or may produce thick smoke when burned, which may cause losses of life and property during fire emergencies. It is possible to prepare non-combustible, fire-resistant polymers by adding halogen or phosphorus flame retardants to base polymeric materials. However, while halogenated flame retardants may inhibit combustion, they tend to produce toxic smoke in large-scale fires. For this reason, various countries have begun restricting the use of halogenated flame retardants. Phosphorus flame retardants do not produce toxic smoke. Nevertheless, when mixed with polymers, phosphorus flame retardants may lower the glass transition temperatures of the polymers or make the final polymeric products more brittle.

Polyurethanes have been used as an organic component for preparing fire-resistant materials. See US Patent Application Publication Nos. US2007149675, US2007149676, US2009061204, US2009143518, US2009143518, and US2011124760. As exemplified by a reaction scheme shown immediately below, polyurethanes can be produced by reacting an isocyanate with a polyol.

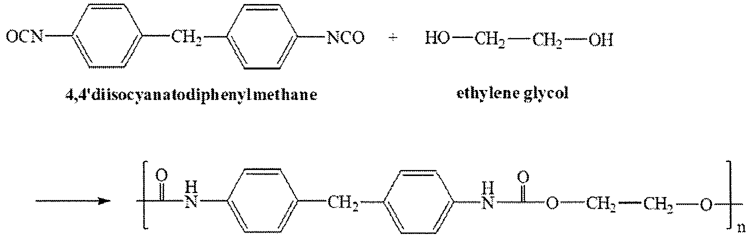

Isocyanates (compound with the functional group of R-N=C=O), however, are hazardous materials. In particular, they are irritants to eyes, skin, and respiratory system. Short-term exposure of isocyanates can cause dermatitis and irritation or burns to eyes, nose, and throat. Even a small amount of isocyanates can produce significant health effects, such as asthma. In addition, isocyanates are sensitive to humidity and tend to cause undesirable side reactions during manufacturing processes. Further, isocyanates may react with water to produce carbon dioxide gas, which may cause bubbling in a coating layer or lowering its sealing properties. Thus, if possible, it would be desirable to avoid using isocyanates for preparing a fire-resistant material.

### SUMMARY OF THE INVENTION

The present disclosure provides a new fire-resistant composite material, which may be prepared without using any isocyanates as raw materials.

The fire-resistant composite material of the present disclosure includes at least one inorganic component and at least one nonisocyanate polyurethane having a formula of: 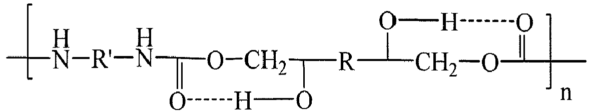 wherein R and R' are each independently chosen from hydrocarbylene groups and hydrocarbylene groups having at least one heteroatom chosen from oxygen, nitrogen, and sulfur; and n=1-30.

Additional objects and advantages of the present disclosure will be set forth in part in the description which follows, and in part will be obvious from the description, or may be learned by practice of the disclosure. The objects and advantages of the disclosure will be realized and attained by means of the elements and combinations particularly pointed out in the appended claims.

It is to be understood that both the foregoing general description and the following detailed description are exemplary and explanatory only and are not restrictive of the invention as claimed.

The accompanying drawings, which are incorporated in and constitute a part of this specification, illustrate exemplary embodiments of the disclosure and together with the description, serve to explain the principles of certain embodiments.

### BRIEF DESCRIPTION OF THE DRAWINGS

Figure 1 shows a non-limiting, exemplary reaction scheme for preparing a fire-resistant composite material.
Figure 2 shows the temperature changes of the non-heated side of different fire-resistant panels heated with a flame of about 1,000 °C to 1,200 °C as described in Examples 4-6 and 8.

### DESCRIPTION OF THE EMBODIMENTS

Reference will now be made in detail to the present embodiments, examples of which are illustrated in the accompanying drawings.

The present disclosure provides a fire-resistant composite material comprising:
at least one inorganic component and
at least one nonisocyanate polyurethane having a formula of: 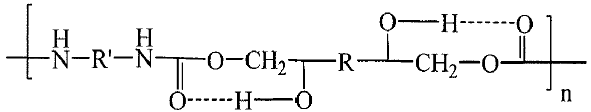
wherein R and R' are each independently chosen from hydrocarbylene groups and hydrocarbylene groups having at least one heteroatom chosen from oxygen, nitrogen, and sulfur; and n=1-30.

"Hydrocarbylene groups" refers to divalent groups formed by removing two hydrogen atoms from a hydrocarbon, the free valences of which are not engaged in a double bond. "Hydrocarbylene groups" may be aliphatic, aromatic, linear, branched, or cyclic, and combinations thereof. In some embodiments, "hydrocarbylene groups" may be chosen from linear or branched alkylene groups, arylene groups, arylalkylene groups, alkenylene groups, and alkynylene groups having 1 to 20 carbon atoms. In some embodiments, hydrocarbylene groups may contain at least one cycloaliphatic or aromatic ring. As a non-limiting examples, hydrocarbylene groups may be chosen from: methylene, ethylene, trimethylene, tetramethylene, butylene, pentamethylene, pentylene, methylpentylene, hexamethylene, hexenylene, ethylhexylene, dimethylhexylene, octamethylene, octenylene, cyclooctylene, methylcyclooctylene, dimethylcyclooctylene, isooctylene, dodecamethylene, hexadecenylene, octadecamethylene, eicosamethylene, hexacosamethylene, triacontamethylene, and phenylenediethylene.

"Hydrocarbylene groups having at least one heteroatom chosen from oxygen, nitrogen, and sulfur" (i.e., heterohydrocarbylene groups) refers to hydrocarbylene groups as provided above that contain at least one heteroatom chosen from oxygen, nitrogen, and sulfur. As non-limiting examples, heterohydrocarbylene groups may be chosen from polyalkylene oxide groups such as diethylene glycol (-CH₂CH₂OCH₂CH₂-O-), polytetramethylene ether, polypropylene oxide, polyethylene oxide, or their combinations in random or block configuration. Further as a non-limiting example, heterohydrocarbylene groups may be chosen from polyalkylene oxide groups having a molecular weight ranging from 200 g/mole to 5000 g/mole. For instance, polyalkylene oxide groups may have a molecular weight less than about 300 g/mole and/or may have a mixed length of alkylene oxides. Also provided as non-limiting examples, heterohydrocarbylene groups may be chosen from piperazin-1,4-diyl, 1,4-diylbis(oxy)bis(methylene), 4- oxa-1,7-heptylene, and 3-oxa-1,5-phenylene. Further provided as non-limiting examples, heterohydrocarbylene groups may be chosen from groups comprising at least one group chosen from aziridin-1-yl, oxetan-2-yl, tetrahydrofuran-3-yl, pyrrolidin-1-yl, tetrahydrothiophen-S,S-dioxide-2-yl, morpholin-4-yl, 1,4-dioxan-2-yl, hexahydroazepin-4-yl, 3-oxa-cyclooctyl, 5-thia-cyclononyl, and 2-aza-cyclodecyl. In some embodiments, heterohydrocarbylene groups may derived from hydrocarbylene groups substituted with at least one group chosen from hydroxyl, (C₁-C₁₀)alkoxy, (C₁-C₁₀) acyloxy, carbonyl, carboxyl, nitro, amino, sulfonyl, sulfoxyl, and heteroaryl, and heteroaromatic groups.

In some embodiments, the at least one inorganic component is bonded to the at least one nonisocyanate polyurethane via covalent bonds.

In some embodiments, the at least one inorganic component is bonded to the at least one nonisocyanate polyurethane via ionic bonds.

In some embodiments, the at least one inorganic component is bonded to the at least one nonisocyanate polyurethane via covalent bonds and ionic bonds.

In some embodiments, the at least one inorganic component comprises at least one OH functional group, which may form metal-oxygen bond(s) with the at least one inorganic component.

In some embodiments, at least part of the at least one inorganic component is chemically bonded, via covalent bonds or ionic bonds or both, to the at least one nonisocyanate polyurethane. In one embodiment, the degree of bonding between the at least part of the at least one inorganic component and the at least one nonisocyanate polyurethane is sufficient to make the fire-resistant composite material with a thickness of about 3 mm capable of withstanding a flame temperature ranging from 1000 °C to 1200 °C for about 3 minutes.

In some embodiments, the at least one inorganic component may be present in an amount ranging from, as non-limiting examples, 10% to 90%, 20% to 80%, 30% to 70%, or 40% to 60% by weight, relative to the total weight of the composite material. For example, the at least one inorganic component may be present in an amount ranging from 30% to 70% by weight, relative to the total weight of the composite material. Further as non-limiting examples, the at least one inorganic composition may be present in an amount of 30%, 35%, 40%, 45%, 50%, 55%, 60%, 65%, or 70% by weight, relative to the total weight of the composite material.

In some embodiments, the at least one nonisocyanate polyurethane may be present in an amount ranging from, as non-limiting examples, 10% to 90%, 20% to 80%, 30% to 70%, or 40% to 60% by weight, relative to the total weight of the composite material. For example, the at least one nonisocyanate polyurethane may be present in an amount ranging from 30% to 70% by weight, relative to the total weight of the composite material. Further as non-limiting examples, the at least one inorganic composition may be present in an amount of 30%, 35%, 40%, 45%, 50%, 55%, 60%, 65%, or 70% by weight, relative to the total weight of the composite material.

In some embodiments, the at least one inorganic component may be chosen from hydroxides, nitrides, oxides, carbides, metal salts, inorganic powderous materials, and inorganic layered materials.

As non-limiting examples, hydroxides may be chosen from metal hydroxides such as aluminum hydroxide (Al(OH)₃) and magnesium hydroxide (Mg(OH)₂).

As non-limiting examples, nitrides may be boron nitride (BN) or silicon nitride (Si₃N₄).

As non-limiting examples, oxides may be silicon dioxide (SiO₂), titanium dioxide (TiO₂), or zinc dioxide (ZnO).

As a non-limiting example, carbides may be silicon carbide (SiC).

As a non-limiting example, metal salts may be calcium carbonate (CaCO₃).

As non-limiting examples, inorganic layer materials may be chosen from clay, talc, and layered double hydroxides (LDH). Further as an example, clay can be chosen from smectite clay, vermiculite, halloysite, sericite, bentonite, montmorillonite, beidellite, nontronite, mica, and hectorite.

In some embodiments, the at least one inorganic component is chosen from aluminum hydroxide, magnesium hydroxide, silicon dioxide, titanium dioxide, zinc dioxide, silicon carbide, calcium carbonate, clay, talc, and layered double hydroxides.

In some embodiments, the at least one inorganic component may be particles such as micro-sized particles or nano-sized particles. As a non-limiting example, nano-sized particles may include those having a diameter ranging from 1 nm to 100 nm.

In some embodiments, the at least one nonisocyanate polyurethane having a formula of: 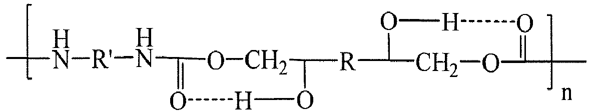 is prepared from a process comprising: reacting a cyclic carbonate compound with a diamine as shown below, wherein R, R' and n are as defined above.

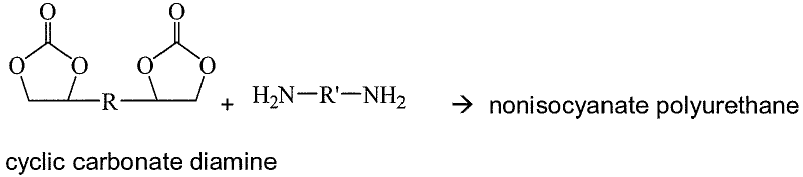

In some embodiments, the at least one nonisocyanate polyurethane may be prepared by reacting the cyclic carbonate compound with the diamine at room temperature without catalyst and/or solvent.

In some embodiments, the diamine used for synthesizing the at least one nonisocyanate polyurethane may be chosen from m-xylylenediamine; 1,4-diaminobutane; hexamethylenediamine; polyethylenimine, ethylenediamine branched; 2,2'-(ethylenedioxy)bis(ethylamine); and 5-amino-1,3,3-trimethylcyclohexanemethylamine, mixture of cis and trans.

In some embodiments, the cyclic carbonate compound may be produced by, as a non-limiting example, catalytic addition of carbon dioxide to epoxides as shown in the following reaction scheme.

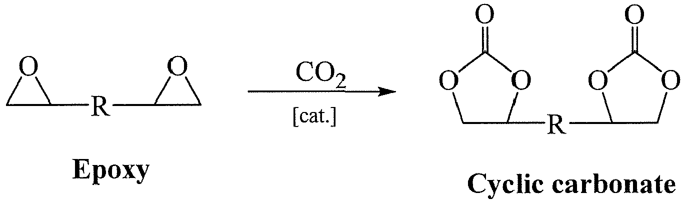

As a non-limiting example, the cyclic carbonate compound may be produced via a cyclocarbonation reaction by reacting an organic material containing epoxy groups with carbon dioxide and a catalyst (such as tetrabutylammonium bromide (TBAB)) at a temperature, for instance, ranging from 50 °C to 100 °C.

As a non-limiting example, organic materials containing epoxy groups may be epoxy resins having two or more epoxy groups per molecule. As non-limiting examples, epoxy resins may be chosen from polyglycidyl ethers, glycidylether esters, epoxidated phenolic-novolac resins (sometimes also referred to as polyglycidyl ethers of phenolic novolac compounds), and epoxidated polyolefins. Also further as a non-limiting example, organic materials containing epoxy groups may be epoxidized soybean oil.

In some embodiments, the composite material may further comprise at least one organic component other than the nonisocyanate polyurethane.

As non-limiting examples, the at least one organic component other than the nonisocyanate polyurethane may be chosen from organic polymers, copolymers, or oligomers prepared from or based on at least one organic component chosen from polyorganic acids, epoxies, polyolefins, and polyamines. In one embodiment, the oligomer may have a mean molecular weight between 200 and 2,999 daltons. In one embodiment, the copolymer or the organic polymer may have a mean molecular weights of about 3,000 to over 100,000 daltons.

In some embodiments, polyorganic acids that may be contained in the composite material include, as a non-limiting example, monopolymers or copolymers that contain carboxylic or sulfonic acids such as poly(ethylene-co-acrylic acid and poly(acrylic acid-co-maleic acid).

In some embodiments, epoxies that may be contained in the composite material include but are not limited to 1,4-butanediol diglycidylether, bisphenol A diglycidyl ether, bis(3,4-epoxy-6-methylcyclohexylmethyl) adipate, vinylcyclohexene dioxide, diglycidyl tetrahydrophthalate, diglycidyl hexahydrophthalate, bis(2,3-epoxycyclopentyl) ether resin, or glycidyl ethers of polyphenol epoxy resin.

In some embodiments, polyamines that may be contained in the composite material include but are not limited to nylon 6 ((NH(CH₂)₅CO)ₙ), nylon 66 ((NH(CH₂)₆-NH-CO(CH₂)₄CO)ₙ), or nylon 12 ((NH(CH₂)₁₁CO)ₙ). In another embodiment, polyamines that may be contained in the composite material include but are not limited to diamine such as 4,4-oxydianiline, 1,4-bis(4-aminophenoxy)benzene, or 2,2-bis[4-(4-aminophenoxy)phenyl]propane. In yet another embodiment, polyamines that may be contained in the composite material include but are not limited to, polyimide prepared from diamines and dianhydrides such as oxydiphthalic anhydride, pyromellitic dianhydride, or benzophenone tetracarboxylic dianhydride.

In some embodiments, polyolefins that may be contained in the composite material include but are not limited to, copolymers of an olefin monomer and a monomer having at least one functional group chosen from -OH, -COOH, -NCO, -NH₃, - NH₂, -NH, and epoxy groups.

In some embodiments, the fire-resistant composite material may further comprise at least one flame retardant additive chosen from melamine, phosphorous containing flame retardant additives, nitrogen containing flame retardant additives, halogen containing flame retardant additives, and inorganic flame retardant additives.

In some embodiments, the at least one flame retardant may be present in an amount ranging from 0.1 % to 30%, such as 0.1 % to 20% by weight, relative to the total weight of the composite material.

As non-limiting examples, phosphorous containing flame retardant additives may be chosen from:
- phosphine oxide such as triphenylphosphine oxide, tri-(3-hydroxypropyl) phosphine oxide, and tri-(3-hydroxy-2-methylpropyl) phosphine oxide;
- phosphonic acids and their salts, and phosphinic acids and their salts, such as phosphinic acid of zinc, magnesium, calcium, aluminum, or manganese, for example, aluminum salt of diethylphosphinic acid, aluminum salt of dimethylphosphinic acid, or zinc salt of dimethylphosphinic acid;
- cyclic phosphonates, such as diphosphate cyclic esters, for example, Antiblaze 1045;
- organic phosphates such as triphenylphosphate;
- inorganic phosphates such as ammonium polyphosphates and sodium polyphosphates; or
- red phosphorous.

As non-limiting examples, nitrogen containing flame retardant additives may be chosen from:
- triazines, cyanuric acid, isocyanuric acid, tris(hydroxyethyl) isocyanurate, benzoguanamine, guanidine, allantome, or glycoluril;
- melamine or its derivatives such as melamine cyanurate, melamine oxalate, melamine phthalate, melamine borate, melamine sulfate, melamine phosphate, melamine polyphosphate, and melamine pyrophosphate; and
- melamine homologues such as melem, melam, or melon.

As non-limiting examples, halogen containing flame retardant additives may be chosen from:
- bromine containing flame retardant additives, such as polybromodiphenyl oxydes (PBDPO), brominated polystyrene (BrPS), poly(pentabromobenzylacrylate), brominated indane, tetradecabromodiphenoxybenzene (SAYTEX^{®} 120), ethane- 1,2-bis(pentabromophenyl) or SAYTEX^{®} 8010 (Albemarle Corporation) tetrabromobisphenol A, and brominated epoxy oligomers.
- chlorine containing flame retardant additives, such as DECHLORANE PLUS® from OxyChem (CAS 13560-89-9).

As non-limiting examples, inorganic flame retardant additives may be chosen from antimony trioxide, aluminum hydroxide, magnesium hydroxide, cerium oxide, and boron containing compounds such as calcium borate.

In some embodiments, the fire-resistant composite material may further comprise fillers and reinforcing materials and/or other additives, such as plasticizers, nucleating agents, catalysts, light and/or thermal stabilizers, lubricants, antidripping agents, antioxidants, antistatic agents, colorants, pigments, matting agents, conductive agents, such as carbon black, molding additives, or other conventional additives.

In some embodiments, the fire-resistant composite material may further comprise ingredients such as solvents, plasticizers, pigments, dyes, fillers, emulsifiers, surfactants, thickeners, rheology modifiers, heat and radiation stabilization additives, defoamers, leveling agents, anti-cratering agents, fillers, sedimentation inhibitors, U.V. absorbers, antioxidants, flame retardants, etc.

As non-limiting examples, the composite material may further comprise filler, including fibrous filler and/or low aspect ratio filler. Suitable fibrous filler may be any conventional filler used in polymeric resins and having an aspect ratio greater than 1. Such fillers may exist in the form of whiskers, needles, rods, tubes, strands, elongated platelets, lamellar platelets, ellipsoids, micro fibers, nanofibers and nanotubes, elongated fullerenes, and the like. Where such fillers exist in aggregate form, an aggregate having an aspect ratio greater than 1 will also suffice for the fibrous filler.

Further as non-limiting examples, the composite material may further comprise fibrous fillers such as glass fibers, further such as E, A, C, ECR, R, S, D, and NE glasses and quartz, and the like. Other suitable glass fibers may include milled glass fiber, chopped glass fiber, and long glass fiber (for instance those used in a pultrusion process). Other suitable inorganic fibrous fillers may include those derived from blends comprising at least one of aluminum silicates, aluminum oxides, magnesium oxides, and calcium sulfate hemihydrate. Also included among fibrous fillers are single crystal fibers or "whiskers" including silicon carbide, alumina, boron carbide, iron, nickel, or copper. Other suitable inorganic fibrous fillers include carbon fibers, stainless steel fibers, metal coated fibers, and the like.

Also disclosed herein is a process for preparing a fire resistant composite material comprising: mixing at least one inorganic material with at least one nonisocyanate polyurethane having a formula of: 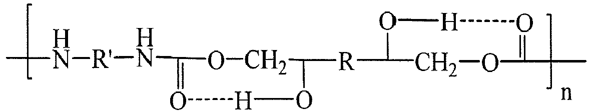 wherein R and R' are each independently chosen from hydrocarbylene groups and hydrocarbylene groups having at least one heteroatom chosen from oxygen, nitrogen, and sulfur; and n=1-30.

In some embodiments, the process for preparing a fire resistant composite material further comprises allowing a cyclic carbonate having a formula of 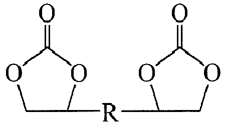 to react with a diamine (H₂N-R'-NH₂) to form the at least one nonisocyanate, wherein R and R' are as defined above.

In some embodiments, the process for preparing a fire resistant composite material further comprises reacting an epoxy resin containing at least two epoxy groups with carbon dioxide to form a cyclic carbonate having a formula of

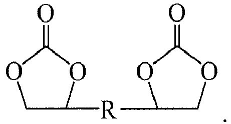

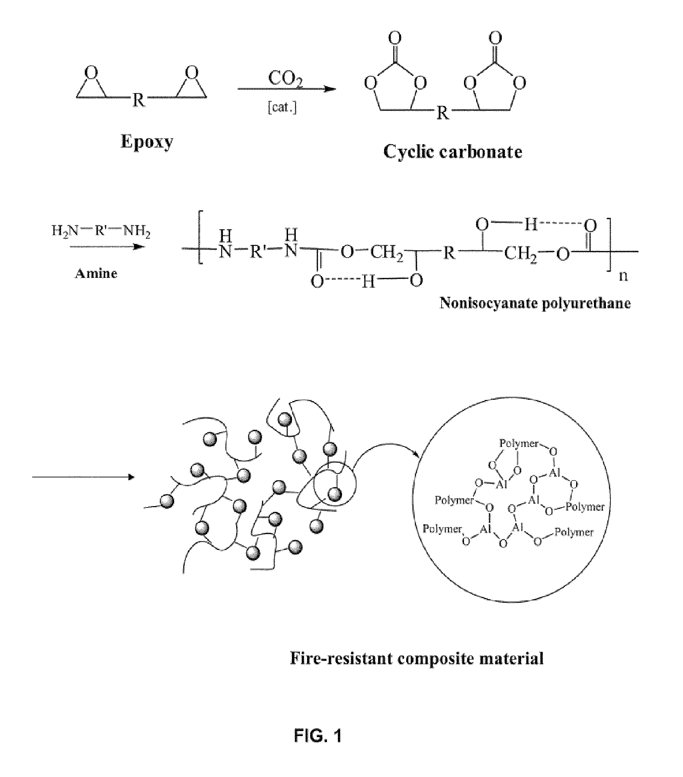

In some embodiments, the process for preparing a fire-resistant composite material may comprise reaction steps as shown in Figure 1.

In some embodiments, the composite material may be prepared by a process comprising mixing at least one inorganic material with at least one nonisocyanate polyurethane, and optionally one or more other organic component, so that they may react or that they may form a covalent or ionic bond in the presence of at least one solvent (such as water, ethanol or methyl ethyl ketone).

In some embodiments, the reaction temperature for the mixing step may range from 20 °C to 150 °C, and the reaction or mixing time may range from several minutes (for example, 10 minutes) to several days.

In some embodiments, the composite material may be prepared by a process comprising:
reacting at least one cyclic carbonate compound and with at least one amine compound to form at least one nonisocyanate polyurethane; and
mixing at least one inorganic component, at least one epoxy resin, and the at least one nonisocyanate polyurethane together; and
allowing the mixture to form into the composite material at a temperature ranging from about 50 °C to about 100 °C.

In some embodiments, the composite material may be prepared by a process comprising:
mixing at least one cyclic carbonate ester, at least one epoxy compound, and at least one inorganic component to form a slurry;
mixing the slurry with at least one amine compound to form a mixture; and
allowing the mixture to form into the composite material at a temperature ranging from about 50 °C to about 100 °C.

In some embodiments, the amount of the at least one amine added may be more than the amount needed for converting all of the at least one cyclic carbonate ester into the at least one nonisocyanate polyurethane.

In some embodiments, the fire-resistant composite material disclosed herein may be molded into fire-resistant plates, flakes, or films by various methods. As a non-limiting example, the fire-resistant composite material may be molded into films having a thickness of less than 0.5 mm, flakes having a thickness between 0.5 and 2 mm, or plates having a thickness exceeding 2 mm. Suitable molding methods include conventional compression molding, injection molding, extrusion molding, calendar molding, and the like. The sample can be oven-dried or kept at room temperature until molding.

In some embodiments, the fire-resistant composite material disclosed herein may be used with other non-combustible or combustible materials such as steel sheeting, steel plates, wood, plastics, mineral board, foam, ceramics and woven products.

As a non-limiting example, the fire-resistant composite material may be molded into a plate, which can be mounted onto the surfaces of flammable or inflammable articles by adhesives or mechanical tools (e.g., screws, nails, or clamps) to improve the fire resistance.

Further as a non-limiting example, the fire-resistant composite material may be fabricated into a multilayer structure with or without other flammable or inflammable plates.

In some embodiment, the fire-resistant composite material disclosed herein may exhibit high ductility and can be made into articles having a curved surface or coatings for curved or irregular structures.

In some embodiments, when the fire-resistant composite material disclosed herein is burned or exposed to fire, the polymer may form a char layer and the inorganic particles may radiate absorbed heat.

In some embodiments, the inorganic particles present in the composite material may strengthen the mechanical properties of the structure through the reaction between inorganic and organic materials, so that the formed char layer is firm and can maintain its structural integrity without peeling or cracking, effectively preventing direct heat transfer to the interior.

In some embodiments, the organic component and the inorganic particles of the composite material are chemically bonded (compared to the conventional physical bonding products) such that the fire-resistant composite material disclosed herein may not melt, ignite, or produce flaming drops under exposure to flame or ignition sources.

In some embodiments, the fire-resistant composite material disclosed herein, at a thickness of about 3 mm, may withstand a flame temperature ranging from 1000 °C to 1200 °C for at least 3 minutes.

In some embodiments, the fire-resistant composite material disclosed herein may have one or more of the following advantages as compared to other fire-resistant materials:
may use CO₂ as a starting material, which is readily available;
may exclude the inclusion of isocyanate, and is thus less toxic to the environment;
may be manufactured without any organic solvent;
may be nonporous;
may have better weatherability, chemical resistance, and hydrolysis resistance;
may have high gloss and may be easy to dye;
may be more adhesive;
may be cured in a humid environment;
may have good self-leveling property; and
may alleviate brittleness associated with epoxy resins or have better flexibility as compared to polyurethane.

### EXAMPLES

### Example 1

330 g of 1,4-butanediol diglycidylether (BDGE) and 33 g of tetrabutylammonium bromide (TBAB) were loaded into a reaction tank and then stirred evenly. The reactor was then vacuum-evacuated for 30 minutes and then filled with CO₂ gas to let the pressure reach 8 kg/cm². The evacuation and CO₂-filling steps were repeated five times, and the final pressure inside the reactor reached 8 kg/cm² before the reactor was heated. After the reactor was heated to 65 °C, the reaction was allowed to run for 24 hours. And after the reactor cooled down to room temperature, the pressure was released. The product obtained was a cyclic carbonate ester: 4,4'-(butane-1,4-diylbis(oxy))bis(methylene)bis(1,3- dioxolan-2-one) (BDCE).

### Example 2

300 g of trimethylopropane triglycidyl ether (PE300) and 30 g of tetrabutylammonium bromide (TBAB) were loaded into a reaction tank and then stirred evenly. The reactor was then vacuum-evacuated for 30 minutes and then filled with CO₂ gas to let the pressure reach 8 kg/cm². The evacuation and CO₂-filling steps were repeated five times, and the final pressure inside the reactor reached 8 kg/cm² before the reactor was heated. After the reactor was heated to 65 °C, the reaction was allowed to run for 24 hours. And after the reactor had been cooled down to room temperature, the pressure was released. The product obtained was a cyclic carbonate ester, PE300C.

### Example 3

300 g of epoxidized soybean oil (ESBO) and 30 g of tetrabutylammonium bromide (TBAB) were loaded into a reaction tank and then stirred evenly. The reactor was then vacuum-evacuated for 30 minutes and then filled with CO₂ gas to let the pressure reach 8 kg/cm². The evacuation and CO₂-filling steps were repeated five times, and the final pressure inside the reactor reached 8 kg/cm² before the reactor was heated. After the reactor was heated to 65 °C, the reaction was allowed to run for 24 hours. And after the reactor had been cooled down to room temperature, the pressure was released. The product obtained was a cyclic carbonate ester, CSBO

### Example 4

5.81 g of cyclic carbonate ester 4,4'-(butane-1,4-diylbis(oxy))bis(methylene) bis(1,3-dioxolan-2-one) (BDCE), 4.05 g of 1,4-butanediol diglycidylether (BDGE), and 6.81 g of epoxy compound bisphenol A diglycidyl ether (1010) were mixed together evenly; 24.4 g of inorganic component Al(OH)₃ was added; and the resulting mixture was stirred to form a slurry. Next, an amine compound mixture containing 4.37 g of JEFFAMINE® D230, 1.55 g of m-xylylenediamine (mXDA), and 1.82 g of polyethyleneimine (PEI800)) was added, and the resulting mixture was stirred continuously for 5 minutes. After the mixture became even it was defoamed by vacuum evacuation, and then the defoamed mixture was poured into a 3 mm-thick film tray. The tray was kept at 50 °C to allow the reaction to proceed. At the end of the reaction, a 3 mm-thick, ivory-colored panel was removed from the tray.

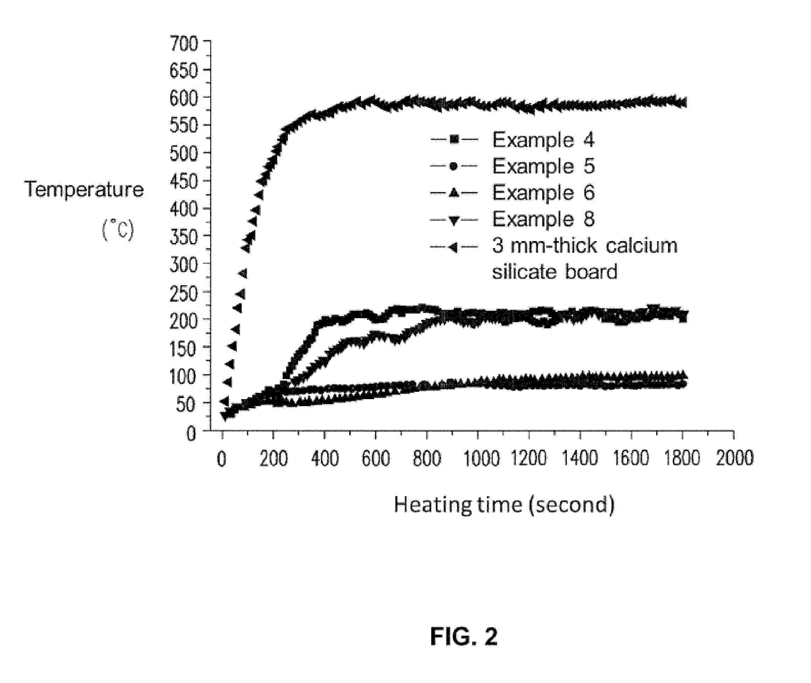

Using a high-temperature heat gun, a flame with a temperature of about 1,000 °C to 1,200 °C was applied directly onto the surface of the 3 mm panel. The temperature on the opposite side (the non-heated side) of the panel was recorded using a temperature detector with a thermocouple and shown in Figure 2. Results showed that the temperature of the non-heated side reached 200 °C after about six minutes of heating and stayed at about 180°C to 200 °C with heat continuously applied on the heated side for about 24 minutes.

For comparison, a 3 mm-thick calcium silicate board (UCC-561) was similarly heated with a flame with a temperature of about 1,000°C to 1,200 °C on one side. The temperature of the non-heated side was recorded and shown in Figure 2.

### Example 5

5.81 g of the cyclic carbonate ester 4,4'-(butane-1,4-diylbis(oxy))bis(methylene) bis(1,3-dioxolan-2-one) (BDCE), 4.05 g of epoxy compound 1,4-butanediol diglycidylether (BDGE), and 6.81 g of epoxy compound bisphenol A diglycidyl ether (1010) were mixed together evenly, 24.4 g of the inorganic component PAP was then added, and the resulting mixture was stirred to form a slurry. Next, an amine compound mixture containing 4.37 g of JEFFAMINE® D230, 1.55 g of m-xylylenediamine (mXDA), and 1.82 g of polyethyleneimine (PEI800) was added, and the mixture was then stirred continuously for 5 minutes. After the mixture became even it was defoamed by vacuum evacuation. The defoamed mixture was then poured into a 3 mm-thick film tray. The tray was kept at 50 °C to allow the reaction to proceed, and at the end of the reaction a 3 mm-thick, ivory-colored panel was removed from the tray.

Using a high-temperature heat gun, a flame with a temperature of about 1,000 °C to 1,200 °C was applied directly onto the surface of the 3 mm panel. The temperature on the opposite side (the non-heated side) of the panel was recorded using a temperature detector with a thermocouple and shown in Figure 2. Results showed that the temperature of the non-heated side reached 60 °C after three minutes of heating and stayed at about 70 °C to 90 °C with heat continuously applied onto the heated side for about 27 minutes.

### Example 6

5.81 g of the cyclic carbonate ester 4,4'-(butane-1,4-diylbis(oxy))bis(methylene) bis(1,3-dioxolan-2-one) (BDCE), 4.05 g of epoxy compound 1,4-butanediol diglycidylether (BDGE), and 6.81 g of epoxy compound bisphenol A diglycidyl ether (1010) were mixed together evenly, 12.2 g of inorganic component Al(OH)₃ and 12.2 g of inorganic component PAP were added, and the mixture was stirred to form a slurry. Next, an amine compound mixture containing 4.37 g of JEFFAMINE® D230, 1.55 g of m-xylylenediamine (mXDA), and 1.82 g of polyethyleneimine (PEI800) was added, and the resulting mixture was stirred continuously for 5 minutes. After the mixture became even, the mixture was defoamed by vacuum evacuation, and the defoamed mixture was then poured into a 3 mm-thick film tray. The tray was kept at 50 °C to allow the reaction to proceed. At the end of the reaction, a 3 mm-thick, ivory-colored panel was removed from the tray.

Using a high-temperature heat gun, a flame with a temperature of about 1,000 °C to 1,200 °C was applied directly onto the surface of the 3 mm panel. The temperature on the opposite side (the non-heated side) of the panel was recorded using a temperature detector with a thermocouple and shown in Figure 2. Results showed that the temperature of the non-heated side reached about 50-65 °C within 200-600 seconds of heating time and stayed at about 80 °C to 100 °C with heat continuously applied onto the heated side for about 20 minutes.

### Example 7

5.81 g of the cyclic carbonate ester 4,4'-(butane-1,4-diylbis(oxy))bis(methylene) bis(1,3-dioxolan-2-one) (BDCE), 4.05 g of the epoxy compound 1,4-butanediol diglycidylether (BDGE), and 6.81 g of the epoxy compound bisphenol A diglycidyl ether (1010) were mixed together evenly, 24.4 g of inorganic component SiO₂ was added, and the mixture was stirred to form a slurry. Next, an amine compound mixture containing 4.37 g of JEFFAMINE® D230, 1.55 g of m-xylylenediamine (mXDA), and 1.82 g of polyethyleneimine (PEI800) was added, and the resulting mixture was stirred continuously for 5 minutes. After the mixture became even it was defoamed by vacuum evacuation. The defoamed mixture was then poured into a 3 mm-thick film tray. The tray was kept at 50 °C to allow the reaction to proceed, and at the end of the reaction, a 3 mm-thick, ivory-colored panel was removed from the tray.

Using a high-temperature heat gun, a flame with a temperature of about 1,000 °C to 1,200 °C was applied directly onto the surface of the 3 mm panel. The temperature on the opposite side (the non-heated side) of the panel was recorded using a temperature detector with a thermocouple. Results showed that the temperature on the non-heated side continued to rise during the testing.

### Example 8

5.81 g of the cyclic carbonate ester 4,4'-(butane-1,4-diylbis(oxy))bis(methylene) bis(1,3-dioxolan-2-one) (BDCE), 4.05 g of epoxy compound 1,4-butanediol diglycidylether (BDGE), and 6.81 g of epoxy compound bisphenol A diglycidyl ether (1010) were mixed together evenly, 36.6 g of inorganic component Al(OH)₃ was added, and the mixture was stirred to form a slurry. Next, an amine compound mixture containing 4.37 g of JEFFAMINE® D230, 1.55 g of m-xylylenediamine (mXDA), and 1.82 g of polyethyleneimine (PEI800) was added, and the resulting mixture was stirred continuously for 5 minutes. After the mixture became even it was defoamed by vacuum evacuation. The defoamed mixture was then poured into a 3 mm-thick film tray. The tray was kept at 50 °C to allow the reaction to proceed, and at the end of the reaction, a 3 mm-thick, ivory-colored panel was removed from the tray.

Using a high-temperature heat gun, a flame with a temperature of about 1,000 °C to 1,200 °C was applied directly onto the surface of the 3 mm panel. The temperature on the opposite side (the non-heated side) of the panel was recorded using a temperature detector with a thermocouple and shown in Figure 2. Results showed that the temperature of the non-heated side reached about 200 °C after 14 minutes of heating and stayed at about 200 °C to 220 °C with heat continuously applied onto the heated side for about 16 minutes.

### Example 9

5.81 g of the cyclic carbonate ester 4,4'-(butane-1,4-diylbis(oxy))bis(methylene) bis(1,3-dioxolan-2-one) (BDCE), 4.05 g of the epoxy compound 1,4-butanediol diglycidylether (BDGE), and 6.81 g of the epoxy compound bisphenol A diglycidyl ether (1010) were mixed together evenly, 12.2 g of inorganic component PAP was added, and the mixture was stirred to form a slurry. Next, an amine compound mixture containing 4.37 g of JEFFAMINE® D230, 1.55 g of m-xylylenediamine (mXDA), and 1.82 g of polyethyleneimine (PEI800) was added, and the resulting mixture was stirred continuously for 5 minutes. After the mixture became even it was defoamed by vacuum evacuation. The defoamed mixture was then poured into a 3 mm-thick film tray. The tray was kept at 50 °C to allow the reaction to proceed, and at the end of the reaction, a 3 mm-thick, ivory-colored panel was removed from the tray.

Using a high-temperature heat gun, a flame with a temperature of about 1,000 °C to 1,200 °C was applied directly onto the surface of the 3 mm panel. The temperature on the opposite side (the non-heated side) of the panel was recorded using a temperature detector with a thermocouple. Results showed that the temperature of the non-heated side continued to rise within 200 seconds to 930 seconds of heating time and then reached about 400 °C. Thereafter, the temperature at the non-heated side stayed at about 400 °C to 420 °C with heat continuously applied onto the heated side for about 14 minutes.

### Example 10

5.81 g of the cyclic carbonate ester 4,4'-(butane-1,4-diylbis(oxy))bis(methylene) bis(1,3-dioxolan-2-one) (BDCE), 4.05 g of the epoxy compound 1,4-butanediol diglycidylether (BDGE), and 6.81 g of the epoxy compound bisphenol A diglycidyl ether (1010) were mixed together evenly, 24.2 g of inorganic component short glass fibers was added, and the mixture was stirred to form a slurry. Next, an amine compound mixture containing 4.37 g of JEFFAMINE® D230, 1.55 g of m-xylylenediamine (mXDA), and 1.82 g of polyethyleneimine (PEI800) was added, and the resulting mixture was stirred continuously for 5 minutes. After the mixture became even it was defoamed by vacuum evacuation. The defoamed mixture was then poured into a 3 mm-thick film tray. The tray was kept at 50 °C to allow the reaction to proceed, and at the end of the reaction, a 3 mm-thick, ivory-colored panel was removed from the tray.

Using a high-temperature heat gun, a flame with a temperature of about 1,000 °C to 1,200 °C was applied directly onto the surface of the 3 mm panel. The temperature on the opposite side (the non-heated side) of the panel was recorded using a temperature detector with a thermocouple. The panel got burnt through after about 130 seconds of heating, and the temperature onto the non-heated side was at about 440 °C.

### Example 11

5.81 g of the cyclic carbonate ester 4,4'-(butane-1,4-diylbis(oxy))bis(methylene) bis(1,3-dioxolan-2-one) (BDCE), 4.05 g of the epoxy compound 1,4-butanediol diglycidylether (BDGE), and 6.81 g of the epoxy compound bisphenol A diglycidyl ether (1010) were mixed together evenly, 7.32 g of inorganic component Al(OH)₃ and 12.2 g of inorganic component PAP were then added, and the resulting mixture was stirred to form a slurry. Next, an amine compound mixture containing 4.37 g of JEFFAMINE® D230, 1.55 g of m-xylylenediamine (mXDA), and 1.82 g of polyethyleneimine (PEI800) was added, and the resulting mixture was stirred continuously for 5 minutes. After the mixture became even it was defoamed by vacuum evacuation. The defoamed mixture was then poured into a 3 mm-thick film tray. The tray was kept at 50 °C to allow the reaction to proceed, and at the end of the reaction, a 3 mm-thick, ivory-colored panel was removed from the tray.

Using a high-temperature heat gun, a flame with a temperature of about 1,000 °C to 1,200 °C was applied directly onto the surface of the 3 mm panel. The temperature on the opposite side (the non-heated side) of the panel was recorded using a temperature detector with a thermocouple. Results showed that the temperature of the non-heated side was maintained at about 130-150 °C during 200-800 seconds of heating time. Thereafter, the temperature of the non-heated side stayed at about 190 °C to 210 °C with heat continuously applied on the heated side for about 16 minutes.

### Example 12

5.81 g of the cyclic carbonate ester 4,4'-(butane-1,4-diylbis(oxy))bis(methylene) bis(1,3-dioxolan-2-one) (BDCE), 4.05 g of the epoxy compound 1,4-butanediol diglycidylether (BDGE), and 6.81 g of the epoxy compound bisphenol A diglycidyl ether (1010) were mixed together evenly, 12.2 g of inorganic component Al(OH)₃ and 7.32 g of inorganic component PAP were then added, and the resulting mixture was then stirred to form a slurry. Next, an amine compound mixture containing 4.37 g of JEFFAMINE® D230, 1.55 g of m-xylylenediamine (mXDA), and 1.82 g of polyethyleneimine (PEI800) was added, and the resulting mixture was stirred continuously for 5 minutes. After the mixture became even, the mixture was defoamed by vacuum evacuation. The defoamed mixture was then poured into a 3 mm-thick film tray. The tray was kept at 50 °C to allow the reaction to proceed, and at the end of the reaction, a 3 mm-thick, ivory-colored panel can be removed from the tray.

Using a high-temperature heat gun, a flame with a temperature of about 1,000 °C to 1,200 °C was applied directly onto the surface of the 3 mm panel. The temperature on the opposite side (the non-heated side) of the panel was recorded using a temperature detector with a thermocouple. Results showed that the temperature of the non-heated side reached about 200 °C after about 22 minutes of heating and then stayed at about 240 °C to 265 °C with heat continuously applied onto the heated side for about 8 minutes.

### Example 13

5.81 g of the cyclic carbonate ester 4,4'-(butane-1,4-diylbis(oxy))bis(methylene) bis(1,3-dioxolan-2-one) (BDCE), 4.05 g of the epoxy compound 1,4-butanediol diglycidylether (BDGE), and 6.81 g of the epoxy compound bisphenol A diglycidyl ether (1010) were added together evenly; 7.32 g of inorganic component Al(OH)₃, 12.2 g of inorganic component PAP, and 4.88 g of inorganic component short glass fibers were then added; and the resulting mixture was stirred to form a slurry. Next, an amine compound mixture containing 4.37 g of JEFFAMINE® D230, 1.55 g of m-xylylenediamine (mXDA), and 1.82 g of polyethyleneimine (PEI800) was added, and the resulting mixture was stirred continuously for 5 minutes. After the mixture became even, the mixture was defoamed by vacuum evacuation. The defoamed mixture was poured into a 3 mm-thick film tray. The tray was kept at 50 °C to allow the reaction to proceed, and at the end of the reaction, a 3 mm-thick, ivory-colored panel was removed from the tray.

Using a high-temperature heat gun, a flame with a temperature of about 1,000 °C to 1,200 °C was applied directly onto the surface of the 3 mm panel. The temperature on the opposite side (the non-heated side) of the panel was recorded using a temperature detector with a thermocouple. Results showed that the temperature of the non-heated side reached about 280 °C after 560 seconds of heating and later stayed at about 370 °C with heat continuously applied onto the heated side for about 20 minutes.

### Example 14

5.81 g of the cyclic carbonate ester 4,4'-(butane-1,4-diylbis(oxy))bis(methylene) bis(1,3-dioxolan-2-one) (BDCE), 4.05 g of the epoxy compound 1,4-butanediol diglycidylether (BDGE), and 6.81 g of the epoxy compound bisphenol A diglycidyl ether (1010) were mixed together evenly; 12.2 g of inorganic component Al(OH)₃, 7.32 g of inorganic component PAP, and 4.88 g of inorganic component short glass fibers were then added; and the resulting mixture was stirred to form a slurry. Next, an amine compound mixture containing 4.37 g of JEFFAMINE® D230, 1.55 g of m-xylylenediamine (mXDA), and 1.82 g of polyethyleneimine (PEI800) was added, and the resulting mixture was stirred continuously for 5 minutes. After the mixture became even, the mixture was defoamed by vacuum evacuation. The defoamed mixture was then poured into a 3 mm-thick film tray. The tray was kept at 50 °C to allow the reaction to proceed, and at the end of the reaction, a 3 mm-thick, ivory-colored panel was removed from the tray.

Using a high-temperature heat gun, a flame with a temperature of about 1,000 °C to 1,200 °C was applied directly onto the surface of the 3 mm panel. The temperature on the opposite side (the non-heated side) of the panel was recorded using a temperature detector with a thermocouple. Results showed that the temperature of the non-heated side stayed at about 140-155 °C within 290-770 seconds of heating time and then stayed at about 340 °C to 365 °C with heat continuously applied on the heated side for about 16 minutes.

### Example 15

Panel prepared according to Examples 4-6 and 8 were further subjected the UL 94 Vertical Flame Test. Briefly, for each test, a panel with a dimension of 125 mm (L) x 12.5 mm (W) x 3 mm (H) was placed vertically in a burn chamber. After the panel had been mounted, a test flame was placed under the panel for 10 seconds and then removed. When the flame was no longer in contact with the tested panel, the duration of any residual flaming combustion was recorded as t1. As soon as the tested panel self-extinguished, the test flame was immediately reapplied for another 10 seconds and then removed. Again, the duration of any residual flaming combustion of the tested panel was recorded as t2. Lastly, a piece of surgical cotton is placed 12 inches below the combusting sample. If any drips fall onto the cotton and cause it to ignite, this detail is also recorded.

To be qualified for the UL94 V-0 class material, the following requirements need to be satisfied:
(1) tested samples may not sustain burning combustion for longer than 10 seconds;
(2) total flaming combustion time for five samples (counting both controlled-flame application (t1+t2)) may not exceed 50 seconds;
(3) none of the samples may be burned up to the mounting clamp by either flaming or glowing combustion;
(4) none of the samples may drip flaming particles that result in the ignition of the surgical cotton below them; and
(5) following the removal of the second controlled flame, samples may not exhibit glowing combustion for more than 30 seconds.

Table 1 below summarizes the UL 94 Vertical Flame Tests of sample panels prepared according to Examples 4-6 and 8.

The results shown that the panels prepared according to Examples 4-6 and 8 met all the requirements for UL94 V-0 class material and exhibited superior fire-resistant properties.

**Table 1**

| Test Results | Example | | | | Requirements of UL94 V-0 class |
|---|---|---|---|---|---|
| | 4 | 5 | 6 | 8 | |
| Residual combustion time after applying the first test flame (t1) (second) | 0* | 0 | 0 | 0 | ≦ 10 second |
| Residual combustion time after applying the first test flame (t2) (second) | 0 | 0 | 0 | 0 | ≦ 10 seconds |
| total flaming combustion time for five samples (second) | 0 | | | | ≦ 50 seconds |
| glowing combustion time after the second removal of the test flame (second) | 0 | 0 | 0 | 0 | ≦ 30 seconds |
| Burning of the mounting clamp | No | No | No | No | No |
| Any drip or flaming particles that result in the ignition of the surgical cotton | No | No | No | No | No |

| | | | | | |
|---|---|---|---|---|---|
| * "0 second" means no observable residual combustion after the removal of the test flame. | | | | | |

### Example 16

Panels prepared according to Example 8 above were subjected to the following standard testing: BSS 7238 (1997), Revision C (Flaming) - Test Method for Smoke Generation by Materials on Combustion; ASTM E662 (2009) - Test Method for Specific Optical Density of Smoke Generated by Solid Materials; and BSS 7239 (1999), Revision A - Test Method for Toxic Gas Generation by Materials on Combustion.

The test results (shown in Table 2) shows that the amount of toxic gas generated during the combustion, as well as the smoke density, were lower than the safety levels specified in both Boeing 7239 and ABD0031 standards.

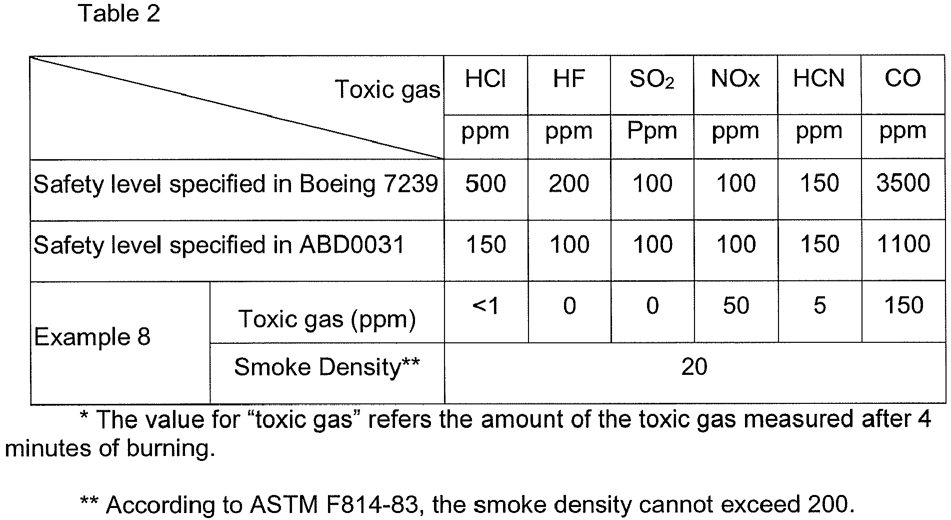

Other embodiments will be apparent to those skilled in the art from consideration of the specification and practice of the embodiments disclosed herein. The specification and examples are intended to be considered as exemplary only, with a true scope and spirit of the invention being indicated by the following claims.

## Claims

1. A fire-resistant composite material comprising:
at least one inorganic component and
at least one nonisocyanate polyurethane having a formula of: 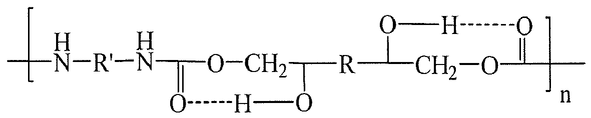 wherein R and R' are each independently chosen from hydrocarbylene groups and hydrocarbylene groups having at least one heteroatom chosen from oxygen, nitrogen, and sulfur; and n=1-30.

2. The fire-resistant composite material according to claim 1, wherein the at least one inorganic component is present in an amount ranging from 10% to 90% by weight, relative to the total weight of the composite material.

3. The fire-resistant composite material according to claim 1 or 2, wherein the at least one inorganic component is present in an amount ranging from 30% to 70% by weight, relative to the total weight of the composite material.

4. The fire-resistant composite material according to any of claims 1-3, wherein the at least one nonisocyanate polyurethane is present in an amount ranging from 10% to 90% by weight relative to the total weight of the composite material.

5. The fire-resistant composite material according to any of claims 1-4, wherein the at least one nonisocyanate polyurethane is present in an amount ranging from 30% to 70% by weight relative to the total weight of the composite material.

6. The fire-resistant composite material according to any of claims 1-5, wherein the at least one inorganic component is chosen from hydroxides, nitrides, oxides, carbides, metal salts, and inorganic layered materials.

7. The fire-resistant composite material according to any of claims 1-6, wherein the at least one inorganic component is chosen from aluminum hydroxide, magnesium hydroxide, silicon dioxide, titanium dioxide, zinc dioxide, silicon carbide, calcium carbonate, clay, talc, and layered double hydroxides.

8. The fire-resistant composite material according to any of claims 1-7, further comprising at least one organic component chosen from polyorganic acids, epoxy resins, polyolefins, and polyamines.

9. The fire-resistant composite material according to any of claims 1-8, further comprising at least one additive chosen from phosphorous containing flame retardant additives, nitrogen containing flame retardant additives, halogen containing flame retardant additives, and inorganic flame retardant additives.

10. The fire-resistant composite material according to any of claims 1-9, further comprising at least one filler chosen from fiberglass, glass sand, alkoxysilane, and siloxane.

11. A process for preparing a fire-resistant composite material comprising:
mixing at least one inorganic material with at least one nonisocyanate polyurethane having a formula of: 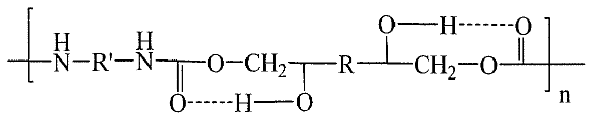 wherein R and R' are each independently chosen from hydrocarbylene groups and hydrocarbylene groups having at least one heteroatom chosen from oxygen, nitrogen, and sulfur; and n=1-30.

12. The process for preparing a fire resistant composite material according to claim 11, further comprising:
allowing at least one cyclic carbonate having a formula of 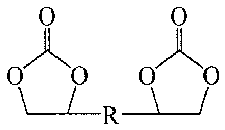 to react with at least one diamine having a formula of H₂N-R'-NH₂, and to form the at least one nonisocyanate.

13. The process according to claim 11 or 12, wherein the at least one inorganic material and the at least one nonisocyanate polyurethane are further mixed with at least one organic component chosen from polyorganic acids, epoxy resins, polyolefins, and polyamines.

14. The process according to any of claims 11-13, wherein the at least one inorganic component is chosen from hydroxides, nitrides, oxides, carbides, metal salts, and inorganic layered materials.

15. The process according to any of claims 11-14, wherein the at least one inorganic component is chosen from aluminum hydroxide, magnesium hydroxide, silicon dioxide, titanium dioxide, zinc dioxide, silicon carbide, calcium carbonate, clay, talc, and layered double hydroxides.
